# EUROPEAN PATENT APPLICATION

(11) **EP 4 607 981 A1**
(43) Date of publication of application: **27.08.2025**
(21) Application number: 24382205.3
(22) Date of filing: 23.02.2024
(51) Int. Cl.: H04W 8/18, H04W 12/48

(54) **DEVICE-EUICC BINDING BASED ON DEVICE SPECIFIC INFORMATION**

(71) Applicant: Giesecke+Devrient Mobile Security Germany GmbH, 81677 München (DE)
(72) Inventor: Patiño, David, 08820 El Prat de Llobregat (Barcelona) (ES); Totev, Georgy, 08820 El Prat de Llobregat (Barcelona) (ES); Ruau, Federico, 08820 El Prat de Llobregat (Barcelona) (ES); Lorente, Raul, 08820 El Prat de Llobregat (Barcelona) (ES); Gifre, Clara, 08820 El Prat de Llobregat (Barcelona) (ES)
(74) Representative: LKGLOBAL Lorenz & Kopf Patentanwalt Attorney at Law PartG mbB

(57) **Abstract**

An eUICC, - hosting, or constructed for hosting, at least one security domain profile, ISD-P, the ISD-P hosting, or constructed for hosting, at least one subscriber profile; - storing pre-stored device specific information of a device; - hosting a device-eUICC binding applet constructed to, after each reset of the eUICC; --- receive from the device device-specific information ; --- compare the received device-specific information to the pre-stored device-specific information; --- when the received device-specific information corresponds to the pre-stored device-specific information, allow further operation of the eUICC; and -- - when the received device-specific information doesn't correspond to the pre-stored device-specific information, disable the eUICC; **characterized by** - the received, pre-stored and compared device-specific information is based on a device-unique pulse sequence generated from one or several unique device identifiers of the device.

## Description

### Field of the invention

The present invention relates to device-eUICC binding based on device specific information.

### Background of the invention and prior art

Mobile devices, which are understood to be devices having ability to communicate in a mobile network, or having the same meaning wireless network, of a mobile network operator, MNO, are operated with an embedded universal integrated circuit card, eUICC, holding one or several MNO owned profiles (subscriber profiles) enabling attachment to and authentication in the mobile network of the respective MNO. The mobile device is often referred to only as device, as compared to the eUICC hosted in the device. Sometimes, the (mobile) device is alternatively referred to as (mobile) terminal.

An eUICC hosts different security domains, including the issuer security domain root, ISD-R, and one or several issuer security domain(s) profile, ISD-P, also referred to as profile container(s). The ISD-R is the entry point to the eUICC via which a profile server, like the SM-DP+, can provision operational profiles to ISD-Ps of the eUICC. In some eUICCs, the ISD-R is implemented as a security domain with only a reduced data set, whereas in some eUICCs the ISD-R is implemented as a complete root profile.

For eUICCs/UICCs, different form factors are known, including plug-in UICC or SIM card being a removable chipcard hardware insertable to and removable from the mobile device, embedded UICC, eUICC in a strict sense being a SIM-card-like UICC constructed to be soldered into a mobile device, and integrated UICC, iUICC, incorporated into the chipset of the mobile device, without having an own hardware.

In applicable specifications directed to content management (provisioning) of eUICCs/ UICCs having ability to such content management (provisioning), throughout the term eUICC is used, and in connection with the invention, also the term eUICC will be used.

In connection with the present invention, an eUICC is understood to be embodied in any form factor, including plug-in, embedded (soldered in) and integrated, and to have capability for content management of the eUICC, e.g. by Remote and Local SIM Management.

Different types of mobile device are known, including consumer devices like smartphones or tablets or smartwatches, automotive devices designed to be used in motor powered vehicles, and loT devices designed to be operated in an industrial or smart home environment.

Different types of mobile devices have different security and performance capabilities. Consumer devices typically have high security and performance capabilities, whereas loT devices typically have only poor security and performance capabilities. Within the consumer devices, a smartphone may have higher security and/or performance capability as compared to a smartwatch.

For this and further reasons, for example, an eUICC dedicated to a consumer device like a smartphone or smartwatch shall not be operated in combination with an loT device, since the relatively simple and cheap loT device may be unable to provide the high security and performance capabilities that are assumed to be present at a consumer device. Also other combinations of a device and an eUICC which are not provided by the device or/and eUICC launching company may be unwanted.

Moreover, even different devices of the same type, such as two different smartphone models, can have different needs and security and performance capacities, such that running an eUICC in a smartphone for which it is not intended may lead to an increased risk of malfunctions and can be unwanted.

A dedicated mobile device and a dedicated eUICC are often sold in the market as a bundle, wherein the mobile device and the eUICC have a binding between each other, referred to as device-eUICC binding, and shall be operated together, however not the mobile device in combination with a different eUICC or the eUICC in combination with a different mobile device.

Abusive market participants or private persons might seek to insert a plug-in eUICC into a device not dedicated to be used with said device, or even to solder out soldered-in eUICC from a device and re-solder it into a different device. Irrespective of the form factor of the eUICC, there is a need to prevent circumventing the binding between a device and an eUICC desired by a party launching the eUICC or/and the device to the market.

From the prior art, different device-eUICC binding solutions are known.

Document US11805397B2 from the prior art discloses an eUICC-device binding method and corresponding apparatus, wherein an hardware identifier, international mobile equipment identifier IMEI value which is used to identify a wireless device with an MNO, is associated to an ICCID value of an eSIMS on an eUICC, so as to effect a binding between the eSIM on the eUICC and the wireless device.

The IMEI lock binding solution described in US11805397B2 binds the IMEI with the device, and is susceptible to be hacked, since one single device identifier, IMEI, only is involved.

Document US10812970B2 from the prior art discloses an eUICC-device binding solution, referred to as SIM-lock, to control network access associated with a wireless device, and to allow network access with the wireless device only if a host wireless device identification matches a stored wireless device identification, wherein the host and stored wireless device identification is one of several possible IDs, namely mobile equipment identifier MEID, international Mobile Station Equipment Identity IMEI, Electronic Serial Number ESN, or pseudo-ESN pESN.

The binding solution disclosed in US10812970B2 mentions further device ID that may be used instead of the IMEI to effect the eUICC-device binding. Nevertheless, also the further identifiers are susceptible to be hacked.

The document ETSI TS 102 223 V14.0.0 (2017-05), Smart Cards; Card Application Toolkit (CAT) (Release 14), 2017-05, from the prior art discloses commands for exchange of information between a UICC and a terminal. The commands apply particularly to the communication between an eUICC (as the UICC) and a mobile device (as the terminal). Chapter 5.2 describes the TERMINAL PROFILE command used to communicate to the UICC, and receive at the UICC from the terminal, CAT (Card Application Toolkit) facilities supported by the terminal. Part of the facilities comprised in the TERMINAL PROFILE information is the so-called local information. Another command described is the command PROVIDE LOCAL INFORMATION, by which the local information can be received at the UICC from the terminal. According to chapter 6.2, the terminal sends to the UICC an TERMINAL PROFILE during UICC initialization. After the terminal has sent the TERMINAL PROFILE to the UICC, further communication between the UICC and the terminal can follow.

### Objective of the invention

It is an object of the present invention to provide a device-eUICC binding solution which is secure and at the same time applicable to a broad range of use cases.

### Summary of the invention

The object of the invention is achieved by an eUICC with following features, according to claim 1. Embodiments of the invention are presented in dependent claims.

In greater detail, the object of the invention is achieved by an eUICC as follows. The eUICC hosts, or is constructed for hosting, at least one security domain profile, ISD-P, the ISD-P hosting, or constructed for hosting, at least one subscriber profile. The eUICC stores pre-stored device-specific information of a device. Further, the device hosts a device-eUICC binding applet constructed to, after each reset of the eUICC;
--- receive from the device device-specific information;
--- compare the received device-specific information to the pre-stored device-specific information;
--- when the received device-specific information corresponds to the pre-stored device-specific information, identify the device and the eUICC in a device-eUICC binding and allow further operation of the eUICC; and
--- when the received device-specific information doesn't correspond to the pre-stored device-specific information, identify the device and the eUICC not in a device-eUICC binding and disable the eUICC.

The method is characterized in that the received, pre-stored and compared device-specific information is based on a device-unique pulse sequence generated from one or several unique device identifiers of the device.

The presented solution relies on the device having the ability to generate the pulse-sequence in a way compatible with the eUICC, and thus specific for the device and the eUICC at the same time. A corresponding device-unique pulse sequence generated by a different device would be different, and thus the generated and the pre-stored information would not match, thus blocking different devices to provide such information.

A further advantage of the present solution is that the one or several unique device identifiers of the device is or are transmitted to the eUICC in the form of said device-unique pulse sequence generated from one or several unique device identifiers. Due to this fact, the transmission can be performed without employing APDU commands and APDU replies. The transmission is by far less structured as compared to a transmission with usage of APDU commands and replies, and therefor cannot or at least cannot easily be spied out. In other words, there is no APDU communication for the binding between the device and the eUICC, and thus it would not be possible, or at least not easily be possible, to spy on the communication between the device and the eUICC.

Still another advantage of the presented solution is that no specific adaption of the device is required for the binding.

Accordingly, the present solution provides a device-eUICC binding solution which is secure and at the same time applicable to a broad range of use cases.

According to some preferred embodiments, the eUICC hosts a device fingerprint generator comprising a fingerprint algorithm. The device fingerprint generator is constructed to generate, by processing said device-unique pulse sequence with said fingerprint algorithm, a device fingerprint. The pre-stored device-specific information is stored in the form of a pre-stored device fingerprint which was generated by processing said device-unique pulse sequence with said fingerprint algorithm. For comparing the received and pre-stored device-specific information, another device fingerprint is generated from the received device-unique pulse sequence and with said fingerprint algorithm. Said generated device fingerprint is compared to the pre-stored device fingerprint.

According to some embodiments, the received, pre-stored and compared one or several identifiers are selected from: IMEl, IMEISV, ESN, MEID, one or several facilities supported by the terminal as indicated in the TERMINAL PROFILE, local information as indicated in the PROVIDE LOCAL INFORMATION response, or any similar identifier available in the device.

According to some embodiments, the received, pre-stored and compared one or several identifiers comprise:
- at least one device identifier selected from: IMEI, IMEISV, ESN, MEID; and
- at least one device identifier which is selected from: a facility supported by the terminal as indicated in the TERMINAL PROFILE or/and a local information as indicated in the PROVIDE LOCAL INFORMATION.

The here described embodiments have the additional advantage of combining device identifiers from the different sources: IDs like IMEI, EID etc; device specific facilities from the TERMINAL PROFILE information; device specific information from LOCAL INFORMATION; this combination makes abusively retrieving (spying) the identifiers impossibly or at least harder to achieve.

A method for installing a device-eUICC binding between an eUICC and a target device is based an eUICC hosting, or constructed for hosting, at least one security domain profile, ISD-P, the ISD-P hosting, or constructed for hosting, at least one subscriber profile. The eUICC hosts a device-eUICC binding applet.

The method comprises:
- taking into operation the eUICC in the target device and resetting the eUICC;
- running the device-eUICC binding applet, comprising:
   --- receive identification information provided by the target device;
   --- store the received identification information as pre-stored identification information of the device.

The method is characterized in that the received and pre-stored device-specific information is based on a device-unique pulse sequence generated from one or several unique device identifiers of the target device.

The method may further comprise at the eUICC a step of decodifying the received device-unique pulse sequence, so as to transform the device-unique pulse sequence into the one or several identifiers from which the pulse sequence was generated, such that the eUICC can manage, operate on, and store the identifiers.

According to some embodiments, the eUICC hosts a device fingerprint generator comprising a fingerprint algorithm. The method then comprises following steps: generating a pre-stored device fingerprint, by processing said device-unique pulse sequence with said fingerprint algorithm so as to generate said pre-stored device fingerprint; storing the pre-stored device-specific information in the form of said generated pre-stored device fingerprint.

The method may further comprise at the eUICC a step of decodifying the received device-unique pulse sequence, so as to transform the device-unique pulse sequence into the one or several identifiers from which the pulse sequence was generated, such that the eUICC can manage, operate on, and store the identifiers, and generating the device fingerprint from the decodified form of the pulse sequence.

The method, according to some embodiments, further comprises:
- upon running the device-eUICC binding applet, examine if pre-stored device-specific information is stored in the eUICC;
- in case no pre-stored device-specific information is stored in the eUICC, continue the method for installing a device-eUICC binding;
- in case pre-stored device-specific information is stored in the eUICC, continue with either one or several of the following:
   --- abort the method for installing a device-eUICC binding;
   --- prompt to a user of the device to input a decision if to install a new device-eUICC binding or to verify a device-eUICC binding;
   --- execute a method for verifying a device-eUICC binding.

According to some embodiments, installing the device-eUICC binding is enabled upon the first power-up of the eUICC in a device, and is disabled upon any subsequent power-up of the same eUICC in any device.

A method for verifying a device-eUICC binding between an eUICC and a device is based on a eUICC hosting, or constructed for hosting, at least one security domain profile, ISD-P, the ISD-P hosting, or constructed for hosting, at least one subscriber profile. The eUICC hosts a device-eUICC binding applet. The eUICC stores pre-stored identification information of a target device.

The method for verifying a device-eUICC binding comprises:
- taking into operation the eUICC in the device and resetting the eUICC;
- running the device-eUICC binding applet, comprising:
   --- receive at the eUICC identification information provided by the device;
   --- compare the received identification information to the pre-stored identification information;
   --- when the received identification information corresponds to the pre-stored identification information, identify the device and the eUICC in a device-eUICC binding and allow further operation of the eUICC; and
   --- when the received identification information doesn't correspond to the pre-stored identification information, identify the device and the eUICC not in a device-eUICC binding and disable the eUICC.

The method is characterized in that the received and pre-stored device-specific information is based on a device-unique pulse sequence generated from one or several unique device identifiers of the device.

In case of a successfully verified device-eUICC binding, the eUICC may further reply to the device with sending an answer to reset, ATR.

According to some embodiments, the eUICC hosts a device fingerprint generator comprising a fingerprint algorithm. The method of verifying comprises a step of generating a device fingerprint, by processing said device-unique pulse sequence with said fingerprint algorithm so as to generate said device fingerprint. The pre-stored device-specific information is in this case stored in the form of a pre-stored device fingerprint which was generated by processing said device-unique pulse sequence with said fingerprint algorithm. For comparing the received and pre-stored device-specific information, a device fingerprint is generated from the received device-unique pulse sequence and with said fingerprint algorithm. The generated device fingerprint is compared to the pre-stored device fingerprint.

The method for installing the binding and the method for verifying the binding may be applied to an eUICC being embodied as detailed further above.

According to some embodiments, the device-specific information is sent from the device to the eUICC in an ENVELOPE command.

The present solution provides as well a device hosting an inventive eUICC.

The present solution provides as well a system comprising a device with an eUICC and at least one mobile network, the system constructed to allow attachment of the device to the mobile network when the device and the eUICC are in a device-eUICC binding, and to disallow attachment of the device to the mobile network when the device and the eUICC are not in a device-eUICC binding.

A computer readable medium according to the present invention has installed code when executed performing a method for installing a device-eUICC binding or a method for verifying a device-eUICC binding.

### Brief description of the drawings

Embodiments of the invention will now be described with reference to the accompanying drawings, throughout which like parts are referred to by like references, and in which represents:
- Fig. 1: a method for installing a device-eUICC binding, according to an embodiment of the invention;
- Fig. 2: a method for verifying a device-eUICC binding, according to an embodiment of the invention.

### Detailed description of the invention

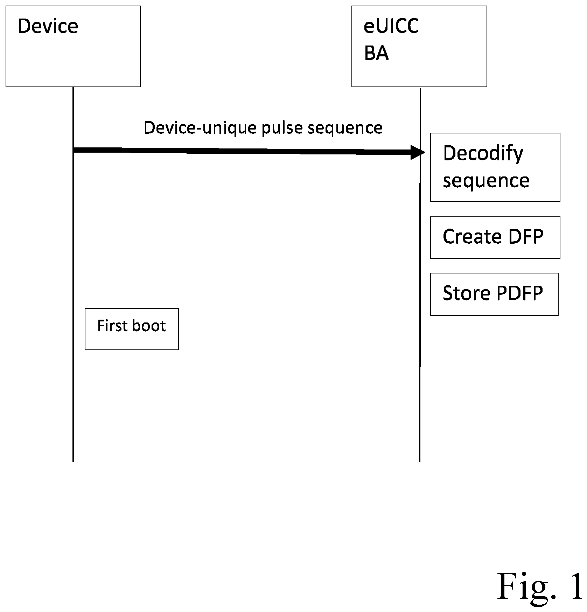

Fig. 1 shows a method for installing a device-eUICC binding, according to an embodiment of the invention. The eUICC hosts hosts, or is constructed for hosting, one or several security domain(s) profile, ISD-P(s), constructed for receiving subscriber profiles. Further, the eUICC hosts a binding applet BA.

The process according to Fig. 1 of installing the binding is the following.

A specific device-unique pulse sequence is sent from the device to the eUICC by the device identifying itself, for example, a pulse codification of the IMEI or even a combination of the IMEI + other defined parameters. At the eUICC, the pulse sequence is decodified and stored as pre-stored device-specific information. According to some embodiments, a device fingerprint DFP is generated from the decodified pulse sequence, and the device fingerprint DFP is stored at the eUICC as pre-stored device fingerprint PDFP, as an embodiment of pre-stored device-specific information.

Preferably, installing the binding is effected only upon first boot of the eUICC.

The proposal includes any extra manipulation on top of the shared data (but also the option of codifying it in plain) before transforming it into a pulse sequence. At the eUICC, the received pulse sequence is decodified, and is compared to the pre-stored device-specific information. According to some embodiments, a device fingerprint DFP is generated from the decodified pulse sequence, and the device fingerprint DFP compared to pre-stored device fingerprint PDFP, which was generated by a similar procedure during installing the binding.

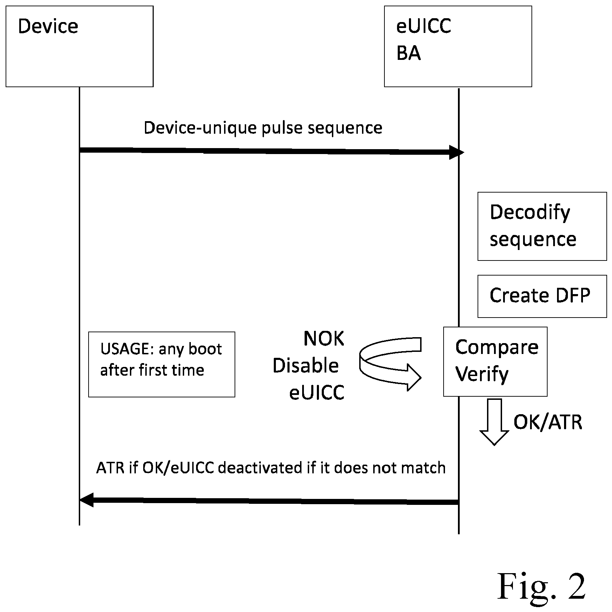

Fig. 2 shows a method for verifying a device-eUICC binding, according to an embodiment of the invention. The eUICC hosts hosts, or is constructed for hosting, one or several security domain(s) profile, ISD-P(s), constructed for receiving subscriber profiles.

The process according to Fig. 2 is the following:
Another specific device-unique pulse sequence is sent from the device to the eUICC by the device identifying itself, for example, a pulse codification of the IMEI or even a combination of the IMEI + other defined parameters, according to the same procedure as for installing the binding.

In case the device sending the device-unique pulse during verifying and the device from which the pre-stored device-specific information / device fingerprint PDFP are the same, the new and pre-stored device-specific information / device fingerprint DFP, PDFP match. Accordingly the binding is verified, and the eUICC further operates and for example replies to the device with an answer to reset, ATR.

In case the device sending the device-unique pulse during verifying and the device from which the pre-stored device-specific information / device fingerprint PDFP are NOT the same, the new and pre-stored device-specific information / device fingerprint DFP, PDFP do NOT match. Accordingly the binding check fails, and the eUICC is disabled.

The pulse sequence sent for the binding verification should have its counterpart in the eUICC as pre-stored device-specific information (if applicable: fingerprint). The pulse sequence corresponding to the pre-stored device-specific information (if applicable: fingerprint) is the only pulse sequence accepted by that specific eUICC. Otherwise, the eUICC blocks itself.

Preferably, the device-eUICC binding is verified upon any boot after the first time boot of the eUICC.

### Cited documents

US10812970B2
US11805397B2

## Claims

1. An eUICC,
- hosting, or constructed for hosting, at least one security domain profile, ISD-P, the ISD-P hosting, or constructed for hosting, at least one subscriber profile;
- storing pre-stored device-specific information of a device;
- hosting a device-eUICC binding applet (BA) constructed to, after each reset of the eUICC;
--- receive from the device device-specific information;
--- compare the received device-specific information to the pre-stored device-specific information;
--- when the received device-specific information corresponds to the pre-stored device-specific information, identify the device and the eUICC in a device-eUICC binding and allow further operation of the eUICC; and
--- when the received device-specific information doesn't correspond to the pre-stored device-specific information, identify the device and the eUICC not in a device-eUICC binding and disable the eUICC;
**characterized by**
- the received, pre-stored and compared device-specific information being based on a device-unique pulse sequence generated from one or several unique device identifiers of the device.

2. The eUICC according to claim 1, **further characterized by**
- the eUICC hosting a device fingerprint generator comprising a fingerprint algorithm, and constructed to generate, by processing said device-unique pulse sequence with said fingerprint algorithm, a device fingerprint (DFP);
- the pre-stored device-specific information being stored in the form of a pre-stored device fingerprint (PDFP) which was generated by processing said device-unique pulse sequence with said fingerprint algorithm;
- for comparing the received and pre-stored device-specific information, from the received device-unique pulse sequence and with said fingerprint algorithm, a device fingerprint (DFP) is generated and is compared to the pre-stored device fingerprint (PDFP).

3. The eUICC according to claim 1 or 2, wherein the received, pre-stored and compared one or several identifiers are selected from: IMEl, IMEISV, ESN, MEID, one or several facilities supported by the terminal as indicated in the TERMINAL PROFILE, local information as indicated in the PROVIDE LOCAL INFORMATION response, or any similar identifier available in the device.

4. The eUICC according to any of claims 1 to 3, wherein the received, pre-stored and compared one or several identifiers comprise:
- at least one device identifier selected from: IMEI, IMEISV, ESN, MEID; and
- at least one device identifier which is selected from: a facility supported by the terminal as indicated in the TERMINAL PROFILE or/and a local information as indicated in the PROVIDE LOCAL INFORMATION.

5. A method for installing a device-eUICC binding between an eUICC and a target device;
- the eUICC hosting, or constructed for hosting, at least one security domain profile, ISD-P, the ISD-P hosting, or constructed for hosting, at least one subscriber profile;
- the eUICC hosting a device-eUICC binding applet (BA);
the method comprising:
- taking into operation the eUICC in the target device and resetting the eUICC;
- running the device-eUICC binding applet (BA), comprising:
--- receive identification information provided by the target device;
--- store the received identification information as pre-stored identification information of the device;
**characterized by**
- the received and pre-stored device-specific information is based on a device-unique pulse sequence generated from one or several unique device identifiers of the target device.

6. The method according to claim 5, **further characterized by**
- the eUICC hosting a device fingerprint generator comprising a fingerprint algorithm;
- a step of generating a pre-stored device fingerprint (DFP), by processing said device-unique pulse sequence with said fingerprint algorithm so as to generate said pre-stored device fingerprint (PDFP);
- storing the pre-stored device-specific information in the form of said generated pre-stored device fingerprint (PDFP).

7. The method according to claim 5 or 6, further comprising
- upon running the device-eUICC binding applet (BA), examine if pre-stored device-specific information is stored in the eUICC;
- in case no pre-stored device-specific information is stored in the eUICC, continue the method for installing a device-eUICC binding;
- in case pre-stored device-specific information is stored in the eUICC, continue with either one or several of the following:
--- abort the method for installing a device-eUICC binding;
--- prompt to a user of the device to input a decision if to install a new device-eUICC binding or to verify a device-eUICC binding;
--- execute a method for verifying a device-eUICC binding.

8. The method according to any of claims 5 to 7, wherein installing the device-eUICC binding is enabled upon the first power-up of the eUICC in a device, and is disabled upon any subsequent power-up of the same eUICC in any device.

9. A method for verifying a device-eUICC binding between an eUICC and a device;
- the eUICC hosting, or constructed for hosting, at least one security domain profile, ISD-P, the ISD-P hosting, or constructed for hosting, at least one subscriber profile;
- the eUICC hosting a device-eUICC binding applet (BA);
- the eUICC storing pre-stored identification information of a target device;
the method comprising:
- taking into operation the eUICC in the device and resetting the eUICC;
- running the device-eUICC binding applet (BA), comprising:
--- receive at the eUICC identification information provided by the device;
--- compare the received identification information to the pre-stored identification information;
--- when the received identification information corresponds to the pre-stored identification information, identify the device and the eUICC in a device-eUICC binding and allow further operation of the eUICC; and
--- when the received identification information doesn't correspond to the pre-stored identification information, identify the device and the eUICC not in a device-eUICC binding and disable the eUICC;
**characterized by**
- the received and pre-stored device-specific information is based on a device-unique pulse sequence generated from one or several unique device identifiers of the device.

10. The method according to claim 9, **further characterized by**
- the eUICC hosting a device fingerprint generator comprising a fingerprint algorithm;
- a step of generating a device fingerprint (DFP), by processing said device-unique pulse sequence with said fingerprint algorithm so as to generate said device fingerprint (DFP);
- the pre-stored device-specific information being stored in the form of a pre-stored device fingerprint (PDFP) which was generated by processing said device-unique pulse sequence with said fingerprint algorithm;
- for comparing the received and pre-stored device-specific information, from the received device-unique pulse sequence and with said fingerprint algorithm, a device fingerprint (DFP) is generated and is compared to the pre-stored device fingerprint (PDFP).

11. The method according to any of claims 5 to 10, the eUICC being embodied according to any of claims 1 to 4.

12. The method according to any of claims 5 to 11, wherein the device-specific information is sent from the device to the eUICC in an ENVELOPE command.

13. A device hosting an eUICC according to any of claims 1 to 4.

14. A system comprising a device according to claim 13 and at least one mobile network, the system constructed to allow attachment of the device to the mobile network when the device and the eUICC are in a device-eUICC binding, and to disallow attachment of the device to the mobile network when the device and the eUICC are not in a device-eUICC binding.

15. A computer readable medium having installed code when executed performing a method according to any of claims 5 to 12.
